# EUROPEAN PATENT APPLICATION

(11) **EP 4 538 865 A1**
(43) Date of publication of application: **16.04.2025**
(21) Application number: 22950735.5
(22) Date of filing: 15.07.2022
(51) Int. Cl.: G06F 8/65

(54) **UPGRADE METHOD AND DEVICE**

(71) Applicant: Shenzhen Yinwang Intelligent Technologies Co., Ltd., Shenzhen, Guangdong 518129 (CN)
(72) Inventor: MA, Tao, Shenzhen, Guangdong 518129 (CN); TU, Boyan, Shenzhen, Guangdong 518129 (CN); ZHOU, Zheng, Shenzhen, Guangdong 518129 (CN)
(74) Representative: Gill Jennings & Every LLP
(86) International application number: PCT/CN2022/106074
(87) International publication number: WO 2024/011617

(57) **Abstract**

An upgrade method and apparatus are provided. The method includes: A server sends upgrade indication information to a vehicle, where the upgrade indication information indicates a first electronic execution unit ECU in the vehicle to perform over-the-air OTA upgrade in a traveling process of the vehicle; and the first ECU in the vehicle performs the OTA upgrade in the traveling process of the vehicle in response to the upgrade indication information. According to this application, the vehicle can perform the OTA upgrade in time. This improves upgrade efficiency, provides good vehicle use experience for a user of the vehicle, and helps increase upgrade willingness of the user of the vehicle.

## Description

### TECHNICAL FIELD

This application relates to the field of over-the-air (over-the-air, OTA) technologies, and in particular, to an upgrade method and apparatus.

### BACKGROUND

OTA means remote management of mobile terminals through an air interface of mobile communication.

OTA upgrade is important for intelligent vehicles, and can upgrade software and/or firmware in the vehicles. The vehicle OTA upgrade may involve a plurality of aspects such as human-machine interaction, autonomous driving, power, a battery system, and an intelligent cockpit infotainment system of the vehicles. The OTA upgrade has advantages such as timeliness, convenience, and cost-effectiveness. In addition, the OTA upgrade can quickly fix vehicle software defects and import new functions, and can implement iterative upgrade of vehicle functions, to improve vehicle use experience of a user.

In current OTA upgrade manners used in the vehicles, drivers have poor vehicle use experience, and timeliness requirements of future intelligent driving cannot be met.

### SUMMARY

This application discloses an upgrade method and apparatus, so that a vehicle can perform OTA upgrade in time. This improves upgrade efficiency, and provides good vehicle use experience for a user of the vehicle.

According to a first aspect, this application provides an upgrade method. The method includes: obtaining upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle; and sending the upgrade indication information.

The method may be applied to a network side device. The network side device may be a server (for example, an OTA server) deployed on a network side, or a component in the server, for example, a chip, a line card, or an integrated circuit. The network side device may be deployed in a cloud environment, that is, may be a cloud server. Alternatively, the network side device may be deployed at an edge, that is, may be an edge server. The network side device may be an integrated device, or may be a plurality of distributed devices. This is not specifically limited in embodiments of this application.

The ECU related to traveling safety in the vehicle includes at least one of the following: an engine management system (engine management system, EMS), a transmission control unit (transmission control unit, TCU), an electronic stability program (electronic stability program, ESP), a battery management system (battery management system, BMS), a motor control unit (motor control unit, MCU), a vehicle control unit (vehicle control unit, VCU), an anti-lock brake system (anti-lock brake system, ABS), an assisted driving control unit, a body control module (body control module, BCM), and the like.

The ECU not related to traveling safety in the vehicle includes at least one of the following: a seat ECU, a trunk ECU, an audio-visual infotainment head unit, and the like.

Herein, the first ECU may alternatively be a control unit in the vehicle. This is not specifically limited herein.

For example, the sending the upgrade indication information may be specifically sending the upgrade indication information to the vehicle, or sending the upgrade indication information to an external device associated with the vehicle. The external device may be, for example, at least one of terminal devices such as a portable mobile device (for example, a mobile phone or a tablet computer), and an intelligent wearable device (for example, a sports band or a watch). Herein, the external device associated with the vehicle may be a terminal device of an owner of the vehicle, a terminal device of a current driver of the vehicle, a terminal device of a person who can use the vehicle, or a terminal device located in the vehicle. This is not specifically limited herein.

In the foregoing method, the vehicle can perform the OTA upgrade during traveling. This helps improve OTA upgrade efficiency of the vehicle, provides good vehicle use experience for a user of the vehicle, and helps increase upgrade willingness of the user of the vehicle.

Optionally, the upgrade indication information includes a type identifier, and when the type identifier indicates that an OTA upgrade type is hot upgrade, the upgrade indication information indicates the first ECU in the vehicle to perform the OTA upgrade in the traveling process of the vehicle.

Hot upgrade is an upgrade manner in which the vehicle may perform the OTA upgrade in a traveling state.

In the foregoing implementation, it may be learned, based on the type identifier, that the OTA upgrade type is hot upgrade, that is, the vehicle may perform the OTA upgrade in the traveling state.

Optionally, when the first ECU performs the OTA upgrade in the traveling process of the vehicle, a first function of the vehicle is in an available state.

In an implementation, the upgrade indication information does not include function disabling information, and the function disabling information indicates the first ECU to disable the first function in a process of performing the OTA upgrade.

The first function may be understood as a vehicle function that needs to be disabled in a non-hot upgrade state, for example, when the ECU in the existing vehicle performs the OTA upgrade. For example, the first function may be a function related to vehicle traveling, for example, one or more of the following: a start or stop function, a start function (for a new energy vehicle), a transmission, a vehicle power supply, a function (for example, an air conditioner or audio-visual infotainment) that affects vehicle power consumption, and the like.

In the foregoing implementation, when the vehicle performs the OTA upgrade of a hot upgrade type, a vehicle function is not affected by the OTA upgrade. Therefore, the vehicle may perform the OTA upgrade in the traveling process, to implement the upgrade during traveling, and provide better vehicle use experience for the driver.

Optionally, the upgrade indication information does not include first time information, and the first time information indicates duration required for performing the OTA upgrade by the first ECU.

For example, the duration indicated by the first time information includes one or more of the following: duration taken for erasing an old code segment from target storage space in the non-hot upgrade state, for example, when the ECU in the existing vehicle performs the OTA upgrade, duration taken in which the ECU writes a new code segment in the upgrade package into the target storage space, duration taken for restarting the ECU after the new code segment in the upgrade package is written into the target storage space, and the like.

For example, the duration indicated by the first time information may also be understood as duration in which the vehicle needs to park when the existing ECU performs the OTA upgrade in the non-hot upgrade state.

The foregoing implementation is different from an existing OTA upgrade manner in that duration required for performing the OTA upgrade by the vehicle in this application is significantly shorter. The vehicle can quickly complete the OTA upgrade. Therefore, the upgrade indication information may not include the first time information. This effectively reduces content in the upgrade indication information, reduces air interface consumption for resource transmission, and increases a transmission rate of the upgrade indication information.

Optionally, the method further includes: sending an upgrade package corresponding to the OTA upgrade, where the upgrade package includes a first code segment, the first code segment is used to replace a second code segment originally executed by the first ECU, the first code segment corresponds to a jump tag, and the jump tag indicates the first ECU not to run the second code segment but to run the first code segment.

In other words, in the OTA upgrade manner provided in this application, the original second code segment is not erased, but the jump tag is inserted, so that the second code segment is not executed and the first code segment is executed, to implement installation of the upgrade package. In this case, the ECU in the vehicle completes the OTA upgrade. In this case, the vehicle function is not affected in an OTA upgrade process of the vehicle, and the vehicle can be upgraded during traveling. This further saves original time taken for erasing the old code segment and time taken for restarting after the code segment is successfully written into the upgrade package, and improves efficiency of performing the OTA upgrade by the ECU.

In an implementation, the upgrade package corresponding to the OTA upgrade may also be included in the upgrade indication information.

Optionally, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade.

The preset time indicated by the second time information may be a time point, or a time period. Duration of the time period may be represented by second s, minute min, or another order unit. This is not specifically limited herein. It can be learned that the second time information provides recommended time for the first ECU to perform the OTA upgrade, which may be used as a reference for the user.

Efficiency of performing the OTA upgrade by the vehicle can be effectively improved by performing the OTA upgrade based on the upgrade sequence information.

According to a second aspect, this application provides an upgrade method. The method includes: receiving upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle; and sending first indication information to the first ECU, where the first indication information indicates the first ECU to perform the OTA upgrade.

The method may be applied to an over-the-air OTAmanagement node (OTA Manager), or a component in the OTA management node, for example, a chip, a line card, or an integrated circuit. For example, the OTA manager may also be referred to as a primary ECU.

For the first ECU, the ECU related to traveling safety in the vehicle, and the ECU not related to traveling safety in the vehicle, refer to the descriptions of the corresponding content in the first aspect. Details are not described herein again.

Herein, the first indication information is associated with the upgrade indication information.

For example, that the first indication information is associated with the upgrade indication information may be understood as: Content in the first indication information is associated with content in the upgrade indication information. For example, the first indication information may include at least one of the following: a type identifier, second time information, and upgrade sequence information in the upgrade indication information.

For example, that the first indication information is associated with the upgrade indication information may also be understood as follows: The first indication information is sent by the OTA manager to the first ECU based on the received upgrade indication information. For example, after receiving upgrade indication information from a network side device, the OTA manager learns that the first ECU needs to perform the OTA upgrade. In this case, the OTA manager may send the first indication information to indicate the first ECU to perform the OTA upgrade.

In the foregoing method, the vehicle can perform the OTA upgrade during traveling. This helps improve OTA upgrade efficiency of the vehicle, helps increase upgrade willingness of a user of the vehicle, and provides good vehicle use experience for the user of the vehicle.

Optionally, the method further includes: receiving an upgrade package corresponding to the OTA upgrade; and sending the upgrade package to the first ECU. In other words, the upgrade package may be independent of the upgrade indication information. This helps reduce a data amount of the upgrade indication information.

For example, the receiving an upgrade package corresponding to the OTA upgrade may be receiving an upgrade package corresponding to the OTA upgrade from the network side device (for example, a server), or may be receiving an upgrade package corresponding to the OTA upgrade from a terminal device. The terminal device may be, for example, at least one of the following: a portable mobile device (for example, a mobile phone or a tablet computer), an intelligent wearable device (for example, a sports band or a watch), and the like. Herein, the terminal device has an association relationship with the vehicle. For example, the terminal device is located in the vehicle, or the terminal device is user equipment of an owner of the vehicle, user equipment of a current driver of the vehicle, or user equipment of a person who can use the vehicle. This is not specifically limited herein.

Optionally, the upgrade package corresponding to the OTA includes a first code segment, the first code segment is used to replace a second code segment originally executed by the first ECU, the first code segment corresponds to a jump tag, and the jump tag indicates the first ECU not to run the second code segment but to run the first code segment.

It can be learned that, in this application, the original second code segment is not erased, but the jump tag is inserted, so that the second code segment is not executed and the first code segment is executed, to implement installation of the upgrade package. In this case, the ECU in the vehicle completes the OTA upgrade. In this case, the vehicle function is not affected in an OTA upgrade process of the vehicle, and the vehicle can be upgraded during traveling. This further saves original time taken for erasing the old code segment and time taken for restarting after the code segment is successfully written into the upgrade package, and improves efficiency of performing the OTA upgrade by the ECU.

In an implementation, the upgrade package may be included in the upgrade indication information. In this way, the upgrade package may be directly obtained from the upgrade indication information, and then the obtained upgrade package is sent to the first ECU.

Optionally, the method further includes: informing a user of the vehicle that the OTA upgrade is upgrade that is capable of being performed in the traveling process of the vehicle.

For example, the user of the vehicle may include at least one of the following: the owner of the vehicle, the current driver of the vehicle, the person who can use the vehicle, and the like.

For example, the user of the vehicle is prompted in a form of speech broadcast, or text prompt on a pop-up window in a display interface. In this case, the user may learn that the OTA upgrade does not affect normal driving of the vehicle of the user, that is, the user may perform the OTA upgrade during traveling. This helps increase willingness of the user to select to perform the OTA upgrade.

Optionally, the method further includes: comparing a size of the upgrade package corresponding to the OTA upgrade with a size of first storage space of the first ECU, where the first storage space is used to store the upgrade package corresponding to the OTA upgrade; and the sending first indication information to the first ECU includes: when the size of the first storage space is not less than the size of the upgrade package corresponding to the OTA upgrade, sending the first indication information to the first ECU.

The first storage space is storage space used for OTA upgrade of a hot upgrade type, and may also be understood as hot upgrade storage space. The first storage space is used to store a code segment in an upgrade package corresponding to the OTA upgrade of a hot upgrade type.

Optionally, the upgrade indication information includes a type identifier, and when the type identifier indicates that an OTA upgrade type is hot upgrade, the upgrade indication information indicates the first ECU in the vehicle to perform the OTA upgrade in the traveling process of the vehicle. For specific descriptions of the type identifier, refer to the related descriptions of the type identifier in the first aspect. Details are not described herein again.

Optionally, when the first ECU performs the OTA upgrade in the traveling process of the vehicle, a first function of the vehicle is in an available state. For specific descriptions of the first function, refer to the related descriptions of the first function in the first aspect.

In an implementation, the upgrade indication information does not include function disabling information, and the function disabling information indicates the first ECU to disable the first function in a process of performing the OTA upgrade. For specific descriptions of the function disabling information, refer to the related descriptions of the function disabling information in the first aspect. Details are not described herein again.

Optionally, the upgrade indication information does not include first time information, and the first time information indicates duration required for performing the OTA upgrade by the first ECU. For specific descriptions of the first time information, refer to the related descriptions of the first time information in the first aspect. Details are not described herein again.

Optionally, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade. For specific descriptions of the second time information and the upgrade sequence information, refer to the related descriptions of the corresponding content in the first aspect. Details are not described herein again.

Optionally, the method further includes: requesting the user of the vehicle whether to perform the OTA upgrade in the traveling process of the vehicle; and the sending first indication information to the first ECU includes: receiving confirmation information, where the confirmation information indicates that the user confirms to perform the OTA upgrade; and sending the first indication information to the first ECU in response to the confirmation information.

Herein, the user of the vehicle includes, for example, at least one of the following: the owner of the vehicle, the current driver of the vehicle, the person who can use the vehicle, and the like.

In the foregoing implementation, a human-vehicle interaction procedure is added, and willingness of the user of the vehicle to perform the OTA upgrade is fully considered. The sending of the first indication information is triggered only when the user of the vehicle confirms that OTA upgrade is to be performed, so that a service is more friendly and humanized.

According to a third aspect, this application provides an upgrade method. The method includes: receiving an upgrade package; and when a vehicle is in a traveling process, performing over-the-air OTA upgrade based on the upgrade package.

The method is applied to a first ECU in the vehicle or a component in the first ECU, for example, a chip, a line card, or an integrated circuit. It may be understood that the first ECU is a to-be-upgraded ECU in the vehicle.

The receiving an upgrade package includes: receiving an upgrade package sent by a server or an OTA manager.

In the foregoing manner, the ECU in the vehicle may perform the OTA upgrade in a traveling state, to perform the OTA upgrade in time. This provides good vehicle use experience for a user of the vehicle, and helps increase upgrade willingness of the user of the vehicle.

In addition, an upgrade package of an emergency version can meet a requirement for performing installation and upgrade in time, helping improve safety of the vehicle.

Optionally, the first ECU includes at least one of an ECU related to traveling safety in the vehicle and an ECU not related to traveling safety in the vehicle. Herein, the first ECU may alternatively be a control unit in the vehicle. For the ECU related to traveling safety in the vehicle, and the ECU not related to traveling safety in the vehicle, refer to the descriptions of the corresponding content in the first aspect. Details are not described herein again.

Optionally, the upgrade package includes a first code segment, the first code segment is used to replace a second code segment originally executed by the first ECU; and the performing OTA upgrade based on the upgrade package includes: running the first code segment based on a jump tag, where the jump tag indicates the first ECU not to run the second code segment but to run the first code segment.

In other words, in the OTA upgrade manner provided in this application, the original second code segment is not erased, but the jump tag is inserted, so that the second code segment is not executed and the first code segment is executed, to implement installation of the upgrade package. In this case, the ECU in the vehicle completes the OTA upgrade. In this case, the vehicle function is not affected in an OTA upgrade process of the vehicle, and the vehicle can be upgraded during traveling. This further saves original time taken for erasing the old code segment and time taken for restarting after the code segment is successfully written into the upgrade package, and improves efficiency of performing the OTA upgrade by the ECU.

Optionally, the first code segment is stored in first storage space, the second code segment is stored in second storage space, and a storage resource corresponding to the first storage space does not overlap a storage resource corresponding to the second storage space.

The first storage space is storage space used for OTA upgrade of a hot upgrade type, and may also be understood as hot upgrade storage space, and the second storage space is not hot upgrade storage space.

A specific example is used to show that the storage resource corresponding to the first storage space does not overlap the storage resource corresponding to the second storage space. It is assumed that the storage resource corresponding to the first storage space is a segment of contiguous storage space from an address 1 to an address 2, and the storage resource corresponding to the second storage space is a segment of contiguous storage space from an address 3 to an address 4, where the address 1 is less than the address 2, and the address 3 is less than the address 4. That the storage resource corresponding to the first storage space does not overlap the storage resource corresponding to the second storage space means: The address 2 is less than the address 3, or the address 4 is less than the address 1.

In the foregoing implementation, the code segment (namely, the first code segment) in the upgrade package is stored in the first storage space that is different from the second storage space in which the old code segment (namely, the second code segment) is located. In this case, the ECU may skip the old code segment, and jump to a storage address in which the first storage space is located to execute the code segment in the upgrade package when the ECU executes a program to the jump tag.

Optionally, the method further includes: comparing a size of the upgrade package with a size of first storage space; and the performing OTA upgrade based on the upgrade package includes: when the size of the first storage space is not less than the size of the upgrade package, performing the OTA upgrade based on the upgrade package.

That is, before performing the OTA upgrade, the ECU may further check whether the size of the storage space used to store the upgrade package is sufficient, and when the size of the storage space used to store the upgrade package is not less than the size of the upgrade package, perform the OTA upgrade.

Optionally, the method further includes: informing a user of the vehicle that the OTA upgrade is upgrade that is capable of being performed in the traveling process of the vehicle.

For example, the user of the vehicle may include at least one of the following: the owner of the vehicle, the current driver of the vehicle, the person who can use the vehicle, and the like.

For example, the user of the vehicle is prompted in a form of speech broadcast, or text prompt on a pop-up window in a display interface. In this case, the user may learn that the OTA upgrade does not affect normal driving of the vehicle of the user, that is, the user may perform the OTA upgrade during traveling. This helps increase a probability of the user to select to perform the OTA upgrade.

Optionally, the method further includes: receiving first indication information from the OTA management node, where the first indication information indicates the first ECU to perform the OTA upgrade; and the performing OTA upgrade based on the upgrade package includes: performing the OTA upgrade based on the upgrade package in response to the first indication information.

The upgrade package may be included in the first indication information, or may be independent of the first indication information and separately sent by the OTA management node. This is not specifically limited herein.

In other words, the performing the OTA upgrade by the ECU may be triggered by the first indication information sent by the OTA management node.

In an implementation, the first indication information includes a type identifier, and when the type identifier indicates that an OTA upgrade type is hot upgrade, the first indication information indicates the first ECU to perform the OTA upgrade in the traveling process of the vehicle.

In the foregoing implementation, the first ECU may learn, based on the type identifier in the first indication information, that the OTA upgrade type is hot upgrade, that is, the vehicle may perform the OTA upgrade in the traveling state.

In an implementation, the first indication information does not include first time information, and the first time information indicates duration required for performing the OTA upgrade by the first ECU. This helps reduce a data amount of the first indication information, and improve transmission efficiency. For specific descriptions of the first time information, refer to the descriptions of the first time information in the first aspect. Details are not described herein again.

Optionally, the method further includes: receiving upgrade indication information from a server, where the upgrade indication information indicates the first ECU to perform the OTA upgrade in the traveling process of the vehicle; and the performing OTA upgrade based on the upgrade package includes: performing the OTA upgrade based on the upgrade package in response to the upgrade indication information.

The upgrade package may be included in the upgrade indication information, or may be independent of the upgrade indication information and separately sent by the server. This is not specifically limited herein.

In other words, the ECU may directly interact with the server, and perform the OTA upgrade based on upgrade indication information sent by the server, without participation of the OTA management node.

Optionally, the upgrade indication information includes a type identifier, and when the type identifier indicates that an OTA upgrade type is hot upgrade, the upgrade indication information indicates the first ECU to perform the OTA upgrade in the traveling process of the vehicle. For specific descriptions of the type identifier, refer to the related descriptions of the type identifier in the first aspect. Details are not described herein again.

Optionally, when the first ECU performs the OTA upgrade in the traveling process of the vehicle, a first function of the vehicle is in an available state. For specific descriptions of the first function, refer to the descriptions of the first function in the first aspect.

In other words, the first function of the vehicle is not affected by the OTA upgrade performed by the first ECU, providing better vehicle use experience for the driver.

In an implementation, the upgrade indication information does not include function disabling information, and the function disabling information indicates the first ECU to disable the first function in a process of performing the OTA upgrade. For specific descriptions of the first function, refer to the descriptions of the first function in the first aspect. Details are not described herein again.

Optionally, the upgrade indication information does not include first time information, and the first time information indicates duration required for performing the OTA upgrade by the first ECU.

The foregoing implementation is different from an existing OTA upgrade manner in that duration required for erasing the old code segment and duration required for restarting the ECU after the new code segment is written are saved. Therefore, in this application, the duration required for performing the OTA upgrade by the vehicle is significantly reduced, improving upgrade efficiency of performing the OTA upgrade by the ECU. In addition, the upgrade indication information may not include the first time information. This effectively reduces content in the upgrade indication information, reduces air interface consumption for resource transmission, and increases a transmission rate of the upgrade indication information.

In an implementation, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade. For specific descriptions of the second time information and the upgrade sequence information, refer to the related descriptions of the corresponding content in the first aspect. Details are not described herein again.

In an implementation, the method further includes: requesting the user of the vehicle whether to perform the OTA upgrade in the traveling process of the vehicle; and the performing over-the-air OTA upgrade based on the upgrade package includes: receiving confirmation information, where the confirmation information indicates that the user confirms to perform the OTA upgrade; and performing the OTA upgrade based on the upgrade package in response to the confirmation information.

Herein, the user of the vehicle includes, for example, at least one of the following: the owner of the vehicle, the current driver of the vehicle, the person who can use the vehicle, and the like.

In the foregoing implementation, a human-vehicle interaction procedure is added, and willingness of the user of the vehicle to perform the OTA upgrade is fully considered. The performing of the OTA upgrade is triggered only when the user of the vehicle confirms that OTA upgrade is to be performed, so that a service is more friendly and humanized.

According to a fourth aspect, this application provides an upgrade apparatus. The apparatus includes a processing unit and a sending unit.

The processing unit is configured to obtain upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle. The sending unit is configured to send the upgrade indication information.

Optionally, the upgrade indication information includes a type identifier, and when the type identifier indicates that an OTA upgrade type is hot upgrade, the upgrade indication information indicates the first ECU in the vehicle to perform the OTA upgrade in the traveling process of the vehicle.

Optionally, when the first ECU performs the OTA upgrade in the traveling process of the vehicle, a first function of the vehicle is in an available state.

In an implementation, the upgrade indication information does not include function disabling information, and the function disabling information indicates the first ECU to disable the first function in a process of performing the OTA upgrade.

Optionally, the upgrade indication information does not include first time information, and the first time information indicates duration required for performing the OTA upgrade by the first ECU.

Optionally, the sending unit is further configured to send an upgrade package corresponding to the OTA upgrade, where the upgrade package includes a first code segment, the first code segment is used to replace a second code segment originally executed by the first ECU, the first code segment corresponds to a jump tag, and the jump tag indicates the first ECU not to run the second code segment but to run the first code segment.

In an implementation, the upgrade package corresponding to the OTA upgrade may be included in the upgrade indication information.

In an implementation, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade.

According to a fifth aspect, this application provides an upgrade apparatus. The apparatus includes a receiving unit and a sending unit. The receiving unit is configured to receive upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle. The sending unit is configured to send first indication information to the first ECU, where the first indication information indicates the first ECU to perform the OTA upgrade.

Optionally, the receiving unit is further configured to receive an upgrade package corresponding to the OTA upgrade; and the sending unit is further configured to send the upgrade package to the first ECU.

Optionally, the upgrade package corresponding to the OTA includes a first code segment, the first code segment is used to replace a second code segment originally executed by the first ECU, the first code segment corresponds to a jump tag, and the jump tag indicates the first ECU not to run the second code segment but to run the first code segment.

In an implementation, the upgrade package is included in the upgrade indication information.

Optionally, the apparatus further includes a processing unit, and the processing unit is configured to inform a user of the vehicle that the OTA upgrade is upgrade that is capable of being performed in the traveling process of the vehicle.

Optionally, the processing unit is further configured to compare a size of the upgrade package corresponding to the OTA upgrade with a size of first storage space of the first ECU, where the first storage space is used to store the upgrade package corresponding to the OTA upgrade; and the sending unit is specifically configured to: when the size of the first storage space is not less than the size of the upgrade package corresponding to the OTA upgrade, send the first indication information to the first ECU.

Optionally, the upgrade indication information includes a type identifier, and when the type identifier indicates that an OTA upgrade type is hot upgrade, the upgrade indication information indicates the first ECU in the vehicle to perform the OTA upgrade in the traveling process of the vehicle.

Optionally, when the first ECU performs the OTA upgrade in the traveling process of the vehicle, a first function of the vehicle is in an available state.

In an implementation, the upgrade indication information does not include function disabling information, and the function disabling information indicates the first ECU to disable the first function in a process of performing the OTA upgrade.

Optionally, the upgrade indication information does not include first time information, and the first time information indicates duration required for performing the OTA upgrade by the first ECU.

In an implementation, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade.

In an implementation, the processing unit is further configured to request the user of the vehicle whether to perform the OTA upgrade in the traveling process of the vehicle; the receiving unit is further configured to receive confirmation information, where the confirmation information indicates that the user confirms to perform the OTA upgrade; and the sending unit is specifically configured to send the first indication information to the first ECU in response to the confirmation information.

According to a sixth aspect, this application provides an upgrade apparatus. The apparatus may be a first ECU in a vehicle. The apparatus includes a receiving unit and a processing unit. The receiving unit is configured to receive an upgrade package. The processing unit is configured to: when the vehicle is in a traveling process, perform over-the-air OTA upgrade based on the upgrade package.

Optionally, the first ECU includes at least one of an ECU related to traveling safety in the vehicle and an ECU not related to traveling safety in the vehicle.

Optionally, the upgrade package includes a first code segment, the first code segment is used to replace a second code segment originally executed by the first ECU; and the processing unit is specifically configured to run the first code segment based on a jump tag, where the jump tag indicates the first ECU not to run the second code segment but to run the first code segment.

Optionally, the first code segment is stored in first storage space, the second code segment is stored in second storage space, and a storage resource corresponding to the first storage space does not overlap a storage resource corresponding to the second storage space.

Optionally, the processing unit is further configured to compare a size of the upgrade package with a size of first storage space; and the processing unit is specifically configured to: when the size of the first storage space is not less than the size of the upgrade package, perform the OTA upgrade based on the upgrade package.

Optionally, the processing unit is further configured to inform a user of the vehicle that the OTA upgrade is upgrade that is capable of being performed in the traveling process of the vehicle.

Optionally, the receiving unit is further configured to receive first indication information from the OTA management node, where the first indication information indicates the first ECU to perform the OTA upgrade; and the processing unit is specifically configured to perform the OTA upgrade based on the upgrade package in response to the first indication information.

In an implementation, the first indication information includes a type identifier, and when the type identifier indicates that an OTA upgrade type is hot upgrade, the first indication information indicates the first ECU to perform the OTA upgrade in the traveling process of the vehicle.

In an implementation, the first indication information does not include first time information, and the first time information indicates duration required for performing the OTA upgrade by the first ECU. Optionally, the receiving unit is further configured to receive upgrade indication information from a server, where the upgrade indication information indicates the first ECU to perform the OTA upgrade in the traveling process of the vehicle; and the processing unit is specifically configured to perform the OTA upgrade based on the upgrade package in response to the upgrade indication information.

Optionally, the upgrade indication information includes a type identifier, and when the type identifier indicates that an OTA upgrade type is hot upgrade, the upgrade indication information indicates the first ECU to perform the OTA upgrade in the traveling process of the vehicle.

Optionally, the upgrade indication information does not include function disabling information, and the function disabling information indicates the first ECU to disable the first function in a process of performing the OTA upgrade.

Optionally, the upgrade indication information does not include first time information, and the first time information indicates duration required for performing the OTA upgrade by the first ECU.

In an implementation, the upgrade indication information further includes at least one of the following content: second time information, where the second time information indicates preset time at which the first ECU starts to perform the OTA upgrade; and upgrade sequence information, where the upgrade sequence information indicates an installation sequence of upgrade packages when there are a plurality of upgrade packages, and the upgrade package is the upgrade package corresponding to the OTA upgrade.

In an implementation, the processing unit is further configured to request the user of the vehicle whether to perform the OTA upgrade in the traveling process of the vehicle; the receiving unit is further configured to receive confirmation information, where the confirmation information indicates that the user confirms to perform the OTA upgrade; and the processing unit is specifically configured to perform the OTA upgrade based on the upgrade package in response to the confirmation information.

According to a seventh aspect, this application provides a computer-readable storage medium, including computer instructions. When the computer instructions are run by a processor, the method according to the first aspect or any one of the possible implementations of the first aspect is implemented, or the method according to the second aspect or any one of the possible implementations of the second aspect is implemented, or the method according to the third aspect or any one of the possible implementations of the third aspect is implemented.

According to an eighth aspect, this application provides a computer program product. When the computer program product is executed by a processor, the method according to the first aspect or any one of the possible embodiments of the first aspect, the method according to the second aspect or any one of the possible implementations of the second aspect, or the method according to the third aspect or any one of the possible implementations of the third aspect may be implemented.

For example, the computer program product may be a software installation package.

According to a ninth aspect, this application provides a chip. The chip includes at least one processor and a communication interface, and the communication interface is configured to provide an information input and/or output for the at least one processor. The chip is configured to implement the method according to the first aspect or any one of the possible embodiments of the first aspect, the method according to the second aspect or any one of the possible embodiments of the second aspect, or the method according to the third aspect or any one of the possible embodiments of the third aspect.

According to a tenth aspect, this application provides a server, and the terminal is configured to implement the method according to the first aspect or any one of the possible embodiments of the first aspect.

According to an eleventh aspect, this application provides an electronic control unit. The electronic control unit includes a first apparatus or a second apparatus. The first apparatus is configured to implement the method according to the second aspect or any one of the possible embodiments of the second aspect, and the second apparatus is configured to implement the method according to the third aspect or any one of the possible embodiments of the third aspect.

Further, the first apparatus may be the apparatus in the fifth aspect or any possible implementation of the fifth aspect or the chip in the ninth aspect; and the second apparatus may be the apparatus in the sixth aspect or any possible implementation of the sixth aspect or the chip in the ninth aspect.

According to a twelfth aspect, this application provides a system. The system includes a first apparatus and a second apparatus, or the system includes a second apparatus and a third apparatus, or the system includes a first apparatus, a second apparatus, and a third apparatus. The first apparatus is configured to implement the method according to the second aspect or any one of the possible embodiments of the second aspect, the second apparatus is configured to implement the method according to the third aspect or any one of the possible embodiments of the third aspect, and the third apparatus is configured to implement the method according to the first aspect or any one of the possible embodiments of the first aspect.

Further, the first apparatus may be the apparatus according to the fifth aspect or any one of the possible implementations of the fifth aspect, or may be the chip in the ninth aspect or the electronic control unit in the eleventh aspect; the second apparatus may be the apparatus according to the sixth aspect or any one of the possible implementations of the sixth aspect, or may be the chip in the ninth aspect or the electronic control unit in the eleventh aspect; and the third apparatus may be the apparatus according to the fourth aspect or any one of the possible implementations of the fourth aspect, or the third apparatus may be the chip in the ninth aspect or the server in the tenth aspect.

According to a thirteenth aspect, this application provides a vehicle. The vehicle includes the electronic control unit in the eleventh aspect, or includes one or more of the following: the apparatus according to the fifth aspect or any one of the possible implementations of the fifth aspect, and the apparatus according to the sixth aspect or any one of the possible implementations of the sixth aspect.

### BRIEF DESCRIPTION OF DRAWINGS

FIG. 1 is a diagram of an application scenario according to an embodiment of this application;
FIG. 2 is a diagram of a system architecture according to an embodiment of this application;
FIG. 3 is a diagram of a framework of a vehicle according to an embodiment of this application;
FIG. 4 is a schematic flowchart of an upgrade method according to an embodiment of this application;
FIG. 5 is a schematic flowchart of still another upgrade method according to an embodiment of this application;
FIG. 6 is a schematic flowchart of still another upgrade method according to an embodiment of this application;
FIG. 7 is a diagram of a structure of an apparatus according to an embodiment of this application;
FIG. 8 is a diagram of a structure of an apparatus according to an embodiment of this application;
FIG. 9 is a diagram of a structure of an apparatus according to an embodiment of this application; and
FIG. 10 is a diagram of a structure of a communication device according to an embodiment of this application.

### DESCRIPTION OF EMBODIMENTS

Terms used in embodiments of this application are merely for the purpose of describing specific embodiments, but are not intended to limit this application. In the specification and claims in embodiments of this application, terms "first", "second", and the like are intended to distinguish between different objects but do not indicate a particular order of the objects.

It should be noted that prefix words such as "first" and "second" used in this application are only intended to distinguish between different described objects, and there is no limitation on a location, a sequence, a priority, a quantity, content, or the like of the described objects. For example, if the described object is a "field", ordinal numbers before the "field" in a "first field" and a "second field" do not limit locations or a sequence of the "fields", and "first" and "second" do not limit whether "fields" modified by "first" and "second" are in a same message, and do not limit a sequence of the "first field" and the "second field". For another example, if a described object is a "level", ordinal numbers before "levels" in a "first level" and a "second level" do not limit priorities of the "levels". For another example, a quantity of described objects is not limited by a prefix word, and may be one or more. A "first device" is used as an example, where a quantity of "devices" may be one or more. In addition, objects decorated by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words used to distinguish between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

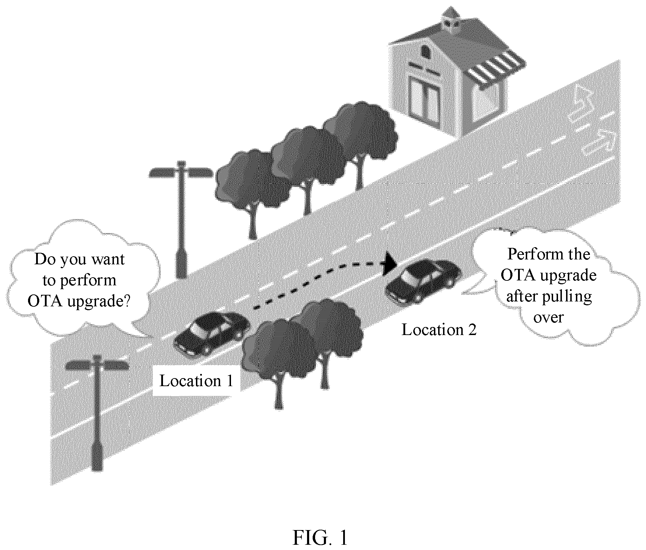

FIG. 1 is a diagram of a scenario in which a vehicle performs OTA upgrade according to an embodiment of this application.

The vehicle usually obtains an upgrade package from an OTA server in the cloud, locally installs the upgrade package, and restarts to implement the OTA upgrade. However, the upgrade package usually relates to update of an electronic control unit (electronic control unit, ECU) related to traveling safety in the vehicle. For example, the ECU in the vehicle implements the OTA upgrade of the vehicle by overwriting an old code segment with a code segment in the upgrade package. As a result, when the vehicle performs the OTA upgrade, a vehicle function needs to be disabled. Therefore, a user chooses to perform the OTA upgrade after pulling over or perform the OTA upgrade in a time period in which the vehicle is not used.

For example, in FIG. 1, the vehicle is in a traveling state, and the user determines to perform the OTA upgrade after the vehicle receives, at a location 1, the upgrade package sent by the OTA server. In this case, the user slows down the vehicle and pulls over at a location 2 to perform the OTA upgrade. In addition, time taken in upgrade package installation and restart processes is long, and the user needs to keep waiting, greatly affecting vehicle use experience of the user. Especially when the upgrade package is an emergency version used to fix a significant software defect, the vehicle needs to perform the OTA upgrade in time, to reduce a safety risk in a traveling process.

For the foregoing problem, an embodiment of this application provides an upgrade method, so that the vehicle can perform the OTA upgrade in time in a traveling state, improving user experience.

The following describes technical solutions of this application with reference to accompanying drawings.

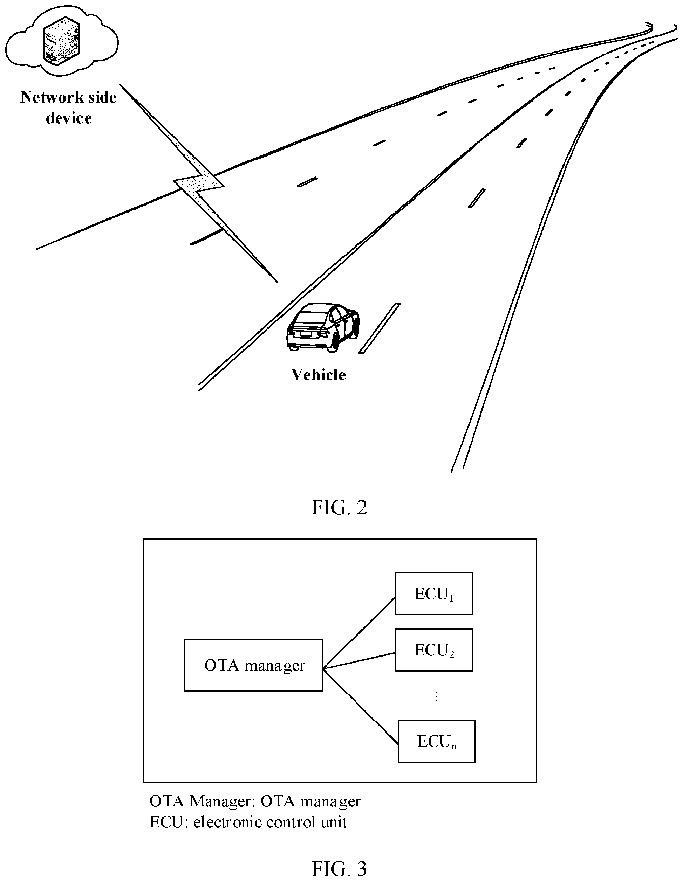

FIG. 2 shows an example diagram of a system architecture. The system is used to implement OTA upgrade of a vehicle. As shown in FIG. 2, the system includes a network side device and the vehicle. The network side device communicates with the vehicle in a wireless connection manner.

The network side device may be, for example, a server (for example, an OTA server) deployed on a network side, or a component in the server, for example, a chip, a line card, or an integrated circuit. The network side device may be deployed in a cloud environment, that is, may be a cloud server. Alternatively, the network side device may be deployed in an edge environment, that is, may be an edge server. The network side device may be an integrated device, or may be a plurality of distributed devices. This is not specifically limited in embodiments of this application.

The vehicle may be, for example, an autonomous vehicle, a new energy vehicle, or a conventional vehicle. The conventional vehicle means a fuel vehicle, for example, may be a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

For example, the network side device sends upgrade indication information to the vehicle, where the upgrade indication information indicates a first ECU in the vehicle to perform the OTA upgrade when the vehicle is in a traveling state; and the vehicle receives the upgrade indication information sent by the network side device, and performs the OTA upgrade based on the upgrade indication information.

In the system shown in FIG. 2, communication between the network side device and the vehicle may use cellular communication technologies, for example, 2G cellular communication, like a global system for mobile communication (global system for mobile communication, GSM) and a general packet radio service (general packet radio service, GPRS); 3G cellular communication, like wideband code division multiple access (wideband code division multiple access, WCDMA), time division-synchronous code division multiple access (time division-synchronous code division multiple access, TS-SCDMA), and code division multiple access (code division multiple access, CDMA); 4G cellular communication, for example, long term evolution (long term evolution, LTE), LTE-vehicle to everything (vehicle to everything, V2X) wireless communication technologies, PC5 communication; 5G cellular communication, for example, new radio (new radio, NR)-V2X PC5 communication; or another evolved cellular communication technologies. A wireless communication system may alternatively communicate with a wireless local area network (wireless local area network, WLAN) by using non-cellular communication technologies, for example, Wi-Fi. This is not specifically limited herein.

For ease of description, the following uses an example in which the network side device is a server to describe the solution. However, the network side device is not limited to only the server in this embodiment of this application.

It should be noted that FIG. 2 is merely an example of an architectural diagram, but a quantity of network elements included in the system shown in FIG. 2 is not limited. Although not shown in FIG. 2, another functional entity may further be included in FIG. 2 in addition to the functional entities shown in FIG. 2. In addition, the method provided in embodiments of this application may be applied to the communication system shown in FIG. 2. Certainly, the method provided in embodiments of this application may also be applied to another communication system. This is not limited in embodiments of this application.

FIG. 3 is a diagram of a framework of a vehicle according to an embodiment of this application. In FIG. 3, the vehicle includes at least one electronic control unit (electronic control unit, ECU). For example, the at least one ECU includes ECU₁, ECU₂, ..., ECU*ₙ* in FIG. 3, where n is a positive integer greater than or equal to 1.

In some possible embodiments, the vehicle further includes an OTA management node (OTA Manager), and the OTA manager may communicate with each ECU in a wireless or wired manner. The OTA manager may obtain, by communicating with an ECU on each link in the vehicle, one or more of the following: software information, firmware information, and hardware information of each ECU. The OTA manager may further receive information returned by each ECU.

OTA upgrade of the vehicle may be understood as that the vehicle implements OTA upgrade of at least one ECU in the vehicle by using the OTA manager.

The ECU may also be referred to as a vehicle-mounted computer, an onboard computer, or the like. The ECU is configured to control a status of the vehicle and implement various functions. Based on different functions, the ECU in the vehicle includes but is not limited to at least one of the following: an engine management system (engine management system, EMS), a transmission control unit (transmission control unit, TCU), an electronic stability program (electronic stability program, ESP), a battery management system (battery management system, BMS), a motor control unit (motor control unit, MCU), a vehicle control unit (vehicle control unit, VCU), an anti-lock brake system (anti-lock brake system, ABS), an assisted driving control unit, a body control module (body control module, BCM), a seat ECU, a trunk ECU, an audio-visual infotainment head unit, and the like.

The EMS is applied to at least one of the following: a gasoline engine, a diesel engine, a hybrid power system, and the like, and mainly controls functions such as fuel injection, ignition, and torque distribution of the engine.

The TCU is usually used in an automatic transmission (for example, an automatic and manual transmission (automatic and manual transmission, AMT), a conventional automatic transmission (automatic transmission, AT), a dual-clutch transmission (dual-clutch transmission, DCT), a continuously variable transmission (continuously variable transmission, CVT)), and the like, and may use different gear strategies based on a traveling state of the vehicle.

The ESP can keep the vehicle stable in various conditions, and provide more obvious effect in the case of oversteer or understeer. Based on different manufacturers, the ESP may also be referred to as a vehicle dynamic control (vehicle dynamic control, VDC), a vehicle stability control (vehicle stability control, VSC), a vehicle stability assist control (vehicle stability assist control, VSA), a dynamic stability control (dynamic stability control, DSC), or the like.

The BMS is prepared for an electric vehicle or a hybrid electric vehicle equipped with a power battery, and is used to improve battery utilization, prevent overcharge and overdischarge, prolong a battery life, and monitor a battery status.

The VCU is used in a power system of a hybrid electric vehicle/pure electric vehicle. The VCU is responsible for coordinating operation of components such as an engine, a drive motor, a transmission, and a power battery, to improve economical performance, power performance, and safety of a new energy vehicle, and reduce emission pollution.

The BCM may be configured to control at least one function of the following: a sunroof, a window, a door lock, an interior light, a seat, a power tailgate, a vehicle light, a rain wiper, passive entry passive start (passive entry passive start, PEPS), and the like.

It should be noted that FIG. 3 is merely an example of a block diagram of a vehicle according to this embodiment of this application, and the block diagram of the vehicle is not limited to the form shown in FIG. 3. In some possible embodiments, the vehicle may include more or fewer devices than those shown in FIG. 3. This is not specifically limited herein.

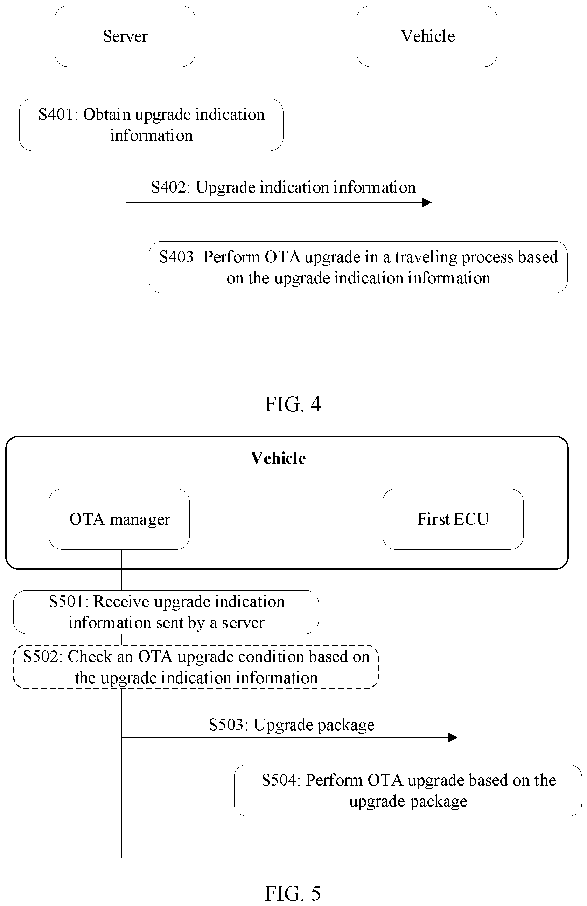

FIG. 4 is a flowchart of an upgrade method according to an embodiment of this application. For example, the method is applied to a system including a server and a vehicle. The server is an example of the network side device in FIG. 1, and the vehicle may be the vehicle in FIG. 1. The method includes but is not limited to the following steps.

S401: The server obtains upgrade indication information.

In an implementation, that the server obtains upgrade indication information may be: The server generates the upgrade indication information.

The upgrade indication information indicates a first ECU in the vehicle to perform OTA upgrade in a traveling process of the vehicle. It may be understood that the first ECU is a to-be-upgraded ECU in the vehicle.

Herein, the first ECU may be a to-be-upgraded control unit in the vehicle.

The first ECU includes at least one of an ECU related to traveling safety in the vehicle and an ECU not related to traveling safety in the vehicle. The ECU related to traveling safety in the vehicle includes at least one of the following: an EMS, a TCU, an ESP, a BMS, a VCU, an ABS, a BCM, an MCU, and an assisted driving control unit. The ECU not related to traveling safety in the vehicle includes but is not limited to: a seat ECU, a trunk ECU, an audio-visual infotainment head unit, and the like. For specific descriptions of the EMS, TCU, ESP, BMS, VCU, ABS, BCM, MCU, and the assisted driving control unit, refer to the related descriptions of the corresponding ECU in FIG. 3. For brevity of this specification, details are not described herein again.

In other words, this embodiment of this application is applicable to both OTA upgrade of the ECU related to traveling safety in the vehicle, and OTA upgrade of the ECU not related to traveling safety in the vehicle.

In some possible embodiments, the upgrade indication information includes a type identifier, and when the type identifier indicates that an OTA upgrade type is hot upgrade, the upgrade indication information indicates the first ECU in the vehicle to perform the OTA upgrade in the traveling process of the vehicle.

Hot upgrade is an upgrade manner in which the vehicle may perform the OTA upgrade in a traveling state. When the OTA upgrade type is hot upgrade, a vehicle function does not need to be disabled in a process of performing the OTA upgrade by the vehicle.

For example, the type identifier may indicate the OTA upgrade type by using bit mapping, a binary value, or another manner. The type identifier may alternatively be a combination of one or more characters, and the character may be one or more of a number, a letter, and another symbol. For example, the type identifier is a combination of one or more numbers, or a combination of one or more pieces of data and letters. For example, when the type identifier is a first value, the type identifier indicates that the OTA upgrade type is hot upgrade. For another example, when the type identifier is "R", it indicates that the OTA upgrade type is hot upgrade.

In some possible embodiments, the upgrade indication information further includes an upgrade package corresponding to the OTA upgrade, where the upgrade package includes a first code segment, the first code segment is used to replace a second code segment originally executed by the first ECU, the first code segment corresponds to a jump tag, and the jump tag indicates the first ECU not to run the second code segment but to run the first code segment. In some possible embodiments, the upgrade package corresponding to the OTA upgrade may not be included in the upgrade indication information, that is, the upgrade package is separately sent by the server. This is not specifically limited herein.

For example, the type identifier may be set independently of the upgrade package, or the type identifier may be set in the upgrade package. This is not specifically limited herein.

In some possible embodiments, when the first ECU performs the OTA upgrade in the traveling process of the vehicle, a first function of the vehicle is in an available state. Alternatively, for example, the upgrade indication information does not include function disabling information, and the function disabling information indicates the first ECU of the vehicle to disable the first function in a process of performing the OTA upgrade.

The first function may be understood as a vehicle function that needs to be disabled in a non-hot upgrade state, for example, when the ECU in the existing vehicle performs the OTA upgrade. For example, the first function may be a function related to vehicle traveling, for example, one or more of the following: a start or stop function, a start function (for a new energy vehicle), a transmission, a vehicle power supply, a function (for example, an air conditioner or audio-visual infotainment) that affects vehicle power consumption, and the like.

In other words, when the OTA upgrade type is hot upgrade, the vehicle function does not need to be disabled, that is, the first function of the vehicle is not affected by the OTA upgrade. The vehicle function is not affected by the OTA upgrade. Therefore, the vehicle may perform the OTA upgrade in the traveling process, to implement the upgrade during traveling, and provide better vehicle use experience for the driver.

In this embodiment of this application, the upgrade indication information does not include first time information, and the first time information indicates duration required for performing the OTA upgrade by the first ECU in the vehicle.

For example, the duration indicated by the first time information includes at least one of the following: duration taken for erasing an old code segment from target storage space in the non-hot upgrade state, for example, when the ECU in the existing vehicle performs the OTA upgrade, duration taken in which the ECU writes a new code segment in the upgrade package into the target storage space, duration taken for restarting the ECU after the new code segment in the upgrade package is written into the target storage space, and the like. For example, the duration indicated by the first time information may also be understood as duration in which the vehicle needs to park when the existing ECU performs the OTA upgrade in the non-hot upgrade state.

For example, the duration indicated by the first time information may be 30 minutes min, 60 min, 75 min, 120 min, or other duration. This is not specifically limited herein.

In other words, if an existing vehicle OTA upgrade manner is used, that is, the new code segment in the upgrade package overwrites the original old code segment, it means that the old code segment stored in original storage space is first erased, then the new code segment is flashed, and finally restarting is performed for running. Therefore, duration taken for existing vehicle OTA upgrade is long, and a user needs to be prompted by using the first time information. However, when the OTA upgrade type is hot upgrade, duration taken for the OTA upgrade provided in this application is short, usually at a second level. The vehicle can quickly complete the OTA upgrade. Therefore, the upgrade indication information may not include the first time information. This can reduce air interface consumption for resource transmission, and increase a transmission rate of the upgrade indication information.

In some possible embodiments, the upgrade indication information further includes prompt information, and the prompt information is used to inform the user of the vehicle that the OTA upgrade is upgrade that is capable of being performed in the traveling process of the vehicle. Herein, the user of the vehicle includes, for example, at least one of the following: the owner of the vehicle, the current driver of the vehicle, the person who can use the vehicle, and the like.

Based on the prompt information, the user may learn that the OTA upgrade does not affect normal driving of the vehicle of the user, that is, the user may perform the OTA upgrade during traveling. This helps increase willingness of the user to select to perform the OTA upgrade.

For example, the prompt information may be information such as "the OTA upgrade may be performed during traveling", "the OTA upgrade may be performed without pulling over", and "the OTA upgrade may be performed without affecting normal driving of the vehicle".

The prompt information may be presented on a display interface of a display apparatus of the vehicle, or may be prompted to the user through voice. For example, the display apparatus may be a head unit tablet computer, a vehicle-mounted display, a head-up display (head-up display, HUD) system, or the like. This is not specifically limited herein.

In this embodiment of this application, the upgrade indication information further includes at least one of the following content:
second time information, where the second time information indicates preset time at which the first ECU starts to perform the OTA upgrade; and
upgrade sequence information, where the upgrade sequence information indicates an installation sequence of upgrade packages when there are a plurality of upgrade packages, and the upgrade package is the upgrade package corresponding to the OTA upgrade.

In an implementation, the second time information is optional information in the upgrade indication information. The preset time indicated by the second time information may be a time point, or a time period. Duration of the time period may be represented by second s, minute min, or another order unit. This is not specifically limited herein. The preset time indicated by the second time information may be set by the server by default, or may be set by the server based on an urgency degree of the upgrade package. This is not specifically limited herein.

For example, the second time information indicates a time point "10:00 AM", that is, it is recommended that the first ECU in the vehicle performs the OTA upgrade at 10:00 AM. For another example, the second time information indicates a time period "14:02 to 14:07", that is, it is recommended that the first ECU in the vehicle performs the OTA upgrade at any moment in the time period 14:02 to 14:06. Therefore, the second time information provides recommended time for the first ECU to perform the OTA upgrade, which may be used as a reference for the user.

In an implementation, the upgrade sequence information is optional information in the upgrade indication information. For example, when there are a plurality of upgrade packages, it means that a plurality of first ECUs in the vehicle need to perform the OTA upgrade. Different upgrade packages correspond to different ECUs. In this case, the upgrade sequence information indicates an installation sequence of the upgrade packages. In this way, efficiency of performing the OTA upgrade by the vehicle can be effectively improved based on the upgrade sequence information.

In some possible embodiments, the upgrade indication information further includes upgrade condition information, where the upgrade condition information indicates an upgrade condition to be met for the first ECU in the vehicle to perform the OTA upgrade. For example, the upgrade condition may be at least one of the following: An on-board diagnostic (on-board diagnostic, OBD) system of the vehicle does not currently perform a diagnosis task, storage space that is of the first ECU and that is used to store an upgrade package corresponding to the hot upgrade type is not less than a size of the upgrade package, and the like. This is not specifically limited herein.

In an implementation, the upgrade condition information is optional information in the upgrade indication information. In some possible embodiments, the upgrade indication information may not include the upgrade condition information. In this case, the vehicle may not determine the condition related to the upgrade condition information before performing the OTA upgrade.

S402: The server sends the upgrade indication information to the vehicle.

Correspondingly, the vehicle receives the upgrade indication information sent by the server.

In an implementation, that the vehicle receives the upgrade indication information sent by the server includes: An OTA manager in the vehicle receives the upgrade indication information sent by the server.

In another implementation, that the vehicle receives the upgrade indication information sent by the server includes: The first ECU in the vehicle receives the upgrade indication information sent by the server.

In an implementation, that the server sends the upgrade indication information to the vehicle includes: The server sends the upgrade indication information to an external device associated with the vehicle. The external device may be, for example, at least one of terminal devices such as a portable mobile device (for example, a mobile phone or a tablet computer), and an intelligent wearable device (for example, a sports band or a watch). Herein, the external device associated with the vehicle means: The external device is a terminal device of an owner of the vehicle, a terminal device of a current driver of the vehicle, a terminal device of a person who can use the vehicle, or a terminal device located in the vehicle. This is not specifically limited herein. In this case, correspondingly, the external device associated with the vehicle receives the upgrade indication information sent by the server.

In some possible embodiments, that the server sends the upgrade indication information to the vehicle includes: The server receives an upgrade request sent by the vehicle; and sends the upgrade indication information to the vehicle in response to the upgrade request. In some possible embodiments, the upgrade request may be received by the server from the external device associated with the vehicle, or may be received by the server from the first ECU. For description of the external device, refer to the foregoing description of the external device. Details are not described herein again.

In some possible embodiments, the server may alternatively autonomously send the upgrade indication information to the vehicle. For example, the server detects that an upgrade package used by the vehicle to perform the OTA upgrade is newly generated locally, and the server sends the upgrade indication information to the vehicle.

For example, the server may send the upgrade indication information to the vehicle in a unicast or multicast manner. When the server sends the upgrade indication information to the vehicle in a multicast manner, it may be understood that the vehicle includes a plurality of vehicles in a same batch or a plurality of vehicles of a same model.

S403: The vehicle performs the OTA upgrade in the traveling process based on the upgrade indication information.

In some possible embodiments, the upgrade indication information includes the upgrade package, and that the vehicle performs the OTA upgrade based on the upgrade indication information includes: The vehicle performs the OTA upgrade based on the upgrade package.

It may be understood that, that the vehicle performs the OTA upgrade may include that the first ECU in the vehicle performs the OTA upgrade.

Further, the upgrade package includes a first code segment, the first code segment is used to replace a second code segment originally executed by the first ECU; and that the vehicle performs the OTA upgrade based on the upgrade package includes: The first ECU runs the first code segment based on a jump tag, where the jump tag indicates the first ECU not to run the second code segment but to run the first code.

In an implementation, the jump tag may be added by the first ECU. For example, the first ECU adds the jump tag before an execution statement of the second code segment, or adds the jump tag before a 1^{st} function name of the second code segment, so that the first ECU skips the second code segment to execute the first code segment when running a program to the jump tag.

In an implementation, the jump tag may be added by the network side device (for example, the server) or the OTA manager, and the server or the OTA manager sends the jump tag to the first ECU. The jump tag may be included in the upgrade package corresponding to OTA upgrade, may be included in the upgrade indication information but is independent of the upgrade package, or may be independent of the upgrade package and separately sent by the server or the OTA manager to the first ECU. This is not specifically limited herein.

The first code segment is stored in first storage space, the second code segment is stored in second storage space, and a storage resource corresponding to the first storage space does not overlap a storage resource corresponding to the second storage space. In other words, a storage address corresponding to the first storage space is different from a storage address corresponding to the second storage space.

For example, the first storage space is a segment of contiguous storage space from an address 1 to an address 2, and the second storage space is a segment of contiguous storage space from an address 3 to an address 4, where the address 1 is less than the address 2, and the address 3 is less than the address 4. That the first storage space does not overlap the second storage space means: The address 2 is less than the address 3, or the address 4 is less than the address 1.

In an implementation, the first storage space is storage space used for OTA upgrade of a hot upgrade type, and may also be understood as hot upgrade storage space. The first storage space is used to store a code segment in an upgrade package corresponding to the OTA upgrade of a hot upgrade type. The second storage space is not the hot upgrade storage space.

In other words, the first code segment in the upgrade package is stored in another storage space that is different from the storage space in which the to-be-replaced second code segment is located, that is, the original second code segment is not erased, but the jump tag is inserted, so that the second code segment is not executed and the first code segment is executed, to implement installation of the upgrade package. In this case, the ECU in the vehicle completes the OTA upgrade.

It can be learned that, an OTA upgrade manner provided in this embodiment of this application is different from an existing OTA upgrade manner in which OTA upgrade is implemented by overwriting an old code segment with a code segment in an upgrade package in that the vehicle function is not affected in an OTA upgrade process of the vehicle, and the vehicle can be upgraded during traveling. This improves vehicle use experience of the user, further saves original time taken for erasing the old code segment and time taken for restarting after the code segment is successfully written into the upgrade package, and improves efficiency of performing the OTA upgrade by the vehicle.

In some possible embodiments, before the first ECU performs the OTA upgrade based on the upgrade package, the first ECU may further compare a size of the upgrade package with a size of the first storage space, and when the size of the first storage space is not less than the size of the upgrade package, the first ECU may perform OTA upgrade based on the upgrade package. In some possible embodiments, when the size of the first storage space is less than the size of the upgrade package, the first ECU may delete an upgrade package that is historically stored in the first storage space to increase a size of the available space of the first storage space, or the first ECU may request to allocate another storage space as the first storage space, so that the size of the first storage space is greater than or equal to a size of an upgrade package received this time.

In some possible embodiments, the first ECU may further inform the user of the vehicle that the OTA upgrade is upgrade that is capable of being performed in the traveling process of the vehicle. Herein, the user of the vehicle includes, for example, at least one of the following: the owner of the vehicle, the current driver of the vehicle, the person who can use the vehicle, and the like.

For example, the user of the vehicle is prompted through voice broadcast, or text in a display interface. Based on the prompt information, the user may learn that the OTA upgrade does not affect normal driving of the vehicle of the user, that is, the user may perform the OTA upgrade during traveling. This helps increase willingness of the user to select to perform the OTA upgrade.

In some possible embodiments, the upgrade indication information further includes second time information, where the second time information indicates preset time at which the first ECU of the vehicle starts to perform the OTA upgrade; and that the first ECU performs the OTA upgrade based on the upgrade package includes: The first ECU performs the OTA upgrade based on the upgrade package when the preset time indicated by the second time information arrives.

For example, if the preset time is a time point, the first ECU performs the OTA upgrade at the time point. For another example, when the preset time is a time period, the first ECU may perform the OTA upgrade at any moment in the time period.

In some possible embodiments, the upgrade indication information further includes upgrade sequence information, where the upgrade sequence information indicates an installation sequence of upgrade packages when there are a plurality of upgrade packages, and the upgrade package is the upgrade package corresponding to the OTA upgrade. In this case, that the first ECU performs the OTA upgrade based on the upgrade package may be: The first ECU performs the OTA upgrade based on the upgrade sequence information and the upgrade package.

In some possible embodiments, the upgrade indication information further includes upgrade condition information, where the upgrade condition information indicates an upgrade condition to be met for the first ECU to perform the OTA upgrade. For example, the upgrade condition may be that the OBD of the vehicle does not perform a diagnosis task. In this case, before the first ECU performs the OTA upgrade, the first ECU may first check whether the OBD currently performs a diagnosis task. When the first ECU determines that the OBD currently does not perform the diagnosis task, the first ECU may perform the OTA upgrade. It may be understood that in some possible embodiments, if the upgrade indication information does not include the upgrade condition information, the first ECU may not determine the condition related to the upgrade condition information.

Based on the vehicle block diagram shown in the embodiment in FIG. 3, it may be learned that the vehicle includes the first ECU. In some possible embodiments, the vehicle further includes the OTA manager. In a scenario in which the vehicle has different components, when the vehicle performs the OTA upgrade, interaction processes of the components in the vehicle may also be different.

In an application scenario, the vehicle includes the OTA manager and the first ECU. In this case, the upgrade indication information is received by the OTA manager from the server. A process in which the vehicle performs the OTA upgrade based on the upgrade indication information may further be classified into the following two scenarios:

### Scenario 1:

The OTA manager receives the upgrade indication information from the server, where the upgrade indication information includes the upgrade package. In this case, after receiving the upgrade indication information from the OTA manager, the first ECU obtains the upgrade package in the upgrade indication information, and performs the OTA upgrade based on the upgrade package.

In some possible embodiments, the upgrade package may not be included in the upgrade indication information, that is, the upgrade indication information and the upgrade package are separately obtained by the OTA manager from the server. In this case, in addition to sending, to the first ECU, the upgrade indication information received from the server, the OTA manager may further send, to the first ECU, the upgrade package received from the server. For a specific procedure of interaction between the OTA manager and the first ECU, refer to the related descriptions in the following embodiment in FIG. 5. Details are not described herein again.

Further, when there are a plurality of upgrade packages, the upgrade indication information further includes the upgrade sequence information. In this case, that the OTA manager sends the upgrade package to the first ECU may be: The OTA manager sends an upgrade package to a corresponding first ECU based on the upgrade sequence information.

In some possible embodiments, the upgrade package may not be included in the upgrade indication information, and the OTA manager obtains only the upgrade indication information from the server. In this case, the first ECU may obtain the upgrade indication information from the OTA manager, and the first ECU obtains the upgrade package from the server.

In some possible embodiments, the upgrade package may not be included in the upgrade indication information, and the OTA manager obtains the upgrade package only from the server. In this case, the first ECU may obtain the upgrade package from the OTA manager, and the first ECU obtains the upgrade indication information from the server.

### Scenario 2:

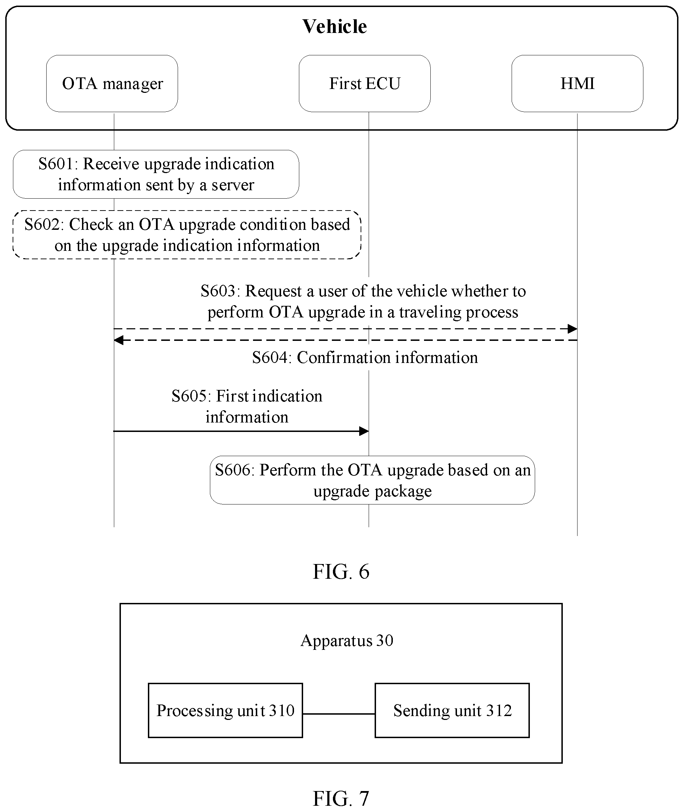

The OTA manager receives the upgrade indication information from the server, and sends first indication information to the first ECU based on the received upgrade indication information, where the first indication information indicates the first ECU to perform the OTA upgrade; and the first ECU performs the OTA upgrade based on the upgrade package in response to the first indication information, where the upgrade package may be obtained by the first ECU from the server or the OTA manager. For a specific procedure of interaction between the OTA manager and the first ECU in the scenario 2, refer to the related descriptions in the following embodiment in FIG. 6. Details are not described herein again.

In another application scenario, the vehicle is the first ECU. In this case, the first ECU may directly receive the upgrade indication information from the server, and the vehicle performs the OTA upgrade based on the upgrade indication information. Specifically, the first ECU in the vehicle obtains the upgrade package from the upgrade indication information, and performs the OTA upgrade based on the upgrade package. In some possible embodiments, the upgrade package may not be included in the upgrade indication information, and the upgrade package and the upgrade indication information may be separately obtained by the first ECU from the server. In this scenario, for a specific process in which the first ECU performs the OTA upgrade, refer to the related descriptions in S403. Details are not described herein again.

It can be learned that, according to this embodiment of this application, a new OTA upgrade manner is provided. To be specific, the old code segment is skipped by using the jump tag, to execute the new code segment in the another storage space different from the storage space in which the old code segment is located, so that use of the vehicle function is not affected in a process in which the vehicle performs the OTA upgrade, that is, the vehicle can perform the OTA upgrade in the traveling state, implementing upgrade during traveling. This helps improve OTA upgrade efficiency of the vehicle, helps increase upgrade willingness of a user of the vehicle, and provides good vehicle use experience for the user of the vehicle.

FIG. 5 is a schematic flowchart of still another upgrade method according to an embodiment of this application. Compared with the embodiment in FIG. 4, the embodiment in FIG. 5 is applied to a vehicle, and specifically describes, based on the block diagram shown in FIG. 3, an interaction process between an OTA manager and a first ECU in the vehicle when the vehicle performs OTA upgrade. The method includes but is not limited to the following steps.

S501: The OTA manager receives upgrade indication information sent by a server.

The upgrade indication information indicates that a first ECU in the vehicle may perform OTA upgrade in a traveling process of the vehicle. For specific content in the upgrade indication information, refer to the related descriptions of the upgrade indication information in S401 in the embodiment in FIG. 4. For brevity of this specification, details are not described herein again.

Optionally, in some possible embodiments, S502 may be further performed.

S502: The OTA manager checks an OTA upgrade condition based on the upgrade indication information.

Specifically, the upgrade indication information includes upgrade condition information, where the upgrade condition information indicates an upgrade condition to be met for the first ECU to perform the OTA upgrade, and the OTA manager checks the OTA upgrade condition based on the upgrade condition information in the upgrade indication information.

For example, the upgrade condition may be at least one of the following: An on-board diagnostic (on-board diagnostic, OBD) system of the vehicle does not currently perform a diagnosis task, storage space that is of the first ECU and that is used to store an upgrade package corresponding to the hot upgrade type is not less than a size of the upgrade package, and the like.

For example, after receiving the upgrade indication information, the OTA manager may first check at least one of the following upgrade conditions: Whether an OBD of the vehicle currently does not execute a diagnosis task; and whether a size of first storage space of the first ECU is not less than a size of the upgrade package. When the OTA manager determines through check that all the OTA upgrade conditions are satisfied, S503 is performed.

S503: The OTA manager sends the upgrade package to the first ECU.

Correspondingly, the first ECU receives the upgrade package.

In an implementation, the upgrade indication information includes the upgrade package, and that the OTA manager sends the upgrade package to the first ECU may be: The OTA manager obtains the upgrade package from the upgrade indication information, and sends the upgrade package to the first ECU.

In another implementation, the upgrade package may not be included in the upgrade indication information. That the OTA manager sends the upgrade package to the first ECU may be: The OTA manager receives the upgrade package from the server, and sends the received upgrade package to the first ECU.

In some possible embodiments, the OTA manager may further inform a user of the vehicle that the OTA upgrade is upgrade that is capable of being performed in the traveling process of the vehicle.

Herein, the user of the vehicle includes, for example, at least one of the following: the owner of the vehicle, the current driver of the vehicle, the person who can use the vehicle, and the like.

For example, the user of the vehicle is prompted through voice broadcast, or text prompt on a pop-up window in a display interface. In this case, the user may learn that the OTA upgrade does not affect normal driving of the vehicle of the user, that is, the user may perform the OTA upgrade during traveling. This helps increase willingness of the user to select to perform the OTA upgrade.

In some possible embodiments, the OTA manager may further request the user of the vehicle whether to perform the OTA upgrade in the traveling process of the vehicle. Then that the OTA manager sends the upgrade package to the first ECU may be: The OTA manager receives confirmation information, where the confirmation information indicates that the user of the vehicle confirms to perform the OTA upgrade; and the OTA manager sends the upgrade package to the first ECU in response to the confirmation information.

For example, the OTA manager may request, through voice, the user of the vehicle whether to perform the OTA upgrade in the traveling process of the vehicle, or may present, on a display apparatus of the vehicle, information for requesting the user whether to perform the OTA upgrade in the traveling process of the vehicle. This is not specifically limited herein.

For example, the confirmation information of the user may be generated in a voice, posture, gesture, or touch manner. For example, the user may reply with "confirm to perform" through voice. In this way, the vehicle may analyze a collected audio signal of the user by using speech recognition technologies, to obtain the confirmation information. For another example, the user may indicate, by nodding, turning the head, raising a shoulder, or using another posture, to confirm to perform the OTA upgrade. In this case, the vehicle may analyze a posture of the user by using posture recognition technologies to obtain the confirmation information. For another example, the user may indicate, by drawing a tick, a line, or a circle, or using another gesture, to confirm to perform the OTA upgrade. In this case, the vehicle may analyze a gesture of the user by using gesture recognition technologies, to obtain the confirmation information. It can be learned that a confirmation reply of the user is represented through, posture, or gesture, to avoid interference to normal driving of the user, improve human-vehicle interaction experience, allow the user to focus on driving as much as possible in an OTA upgrade process, and improve driving safety.

For another example, the user may further tap, flick, or drag a corresponding confirmation key in the display interface of the display apparatus of the vehicle, to indicate the confirmation reply of the user.

For a specific implementation of a process of interaction between the OTA manager and the user of the vehicle, refer to the following detailed descriptions of related content in the embodiment in FIG. 6. Details are not described herein again.

In this case, a human-vehicle interaction procedure is added. To be specific, the OTA manager triggers sending of the upgrade package to the first ECU only after receiving the confirmation information from the user of the vehicle. Willingness of the user of the vehicle to perform the OTA upgrade is fully considered, so that a service is more humanized.

S504: The first ECU performs the OTA upgrade based on the upgrade package. For details about this step, refer to the related descriptions of S403 in the embodiment in FIG. 4. For brevity of this specification, details are not described herein again.

It can be learned that, according to this embodiment of this application, a new OTA upgrade manner is provided. In this case, use of the vehicle function is not affected in a process in which the vehicle performs the OTA upgrade, that is, the vehicle can perform the OTA upgrade in the traveling state, implementing upgrade during traveling. This helps improve OTA upgrade efficiency of the vehicle, helps increase upgrade willingness of the user of the vehicle, and provides good vehicle use experience for the user of the vehicle.

FIG. 6 is a schematic flowchart of still another upgrade method according to an embodiment of this application. The method is applied to a vehicle. Compared with the embodiment in FIG. 5, the embodiment in FIG. 6 specifically describes an interaction process between an OTA manager a first ECU, and a human-machine interface HMI in a vehicle when the vehicle performs OTA upgrade. The method includes but is not limited to the following steps.

S601: The OTA manager receives upgrade indication information sent by a server. For details of this step, refer to the related descriptions of S501 in FIG. 5. Details are not described herein again.

Optionally, in some possible embodiments, S502 may be further performed.

S602: The OTA manager checks an OTA upgrade condition based on the upgrade indication information. For details of this step, refer to the related descriptions of S502 in FIG. 5. Details are not described herein again.

When the OTA manager determines through check that all OTA upgrade conditions are satisfied, S605 may be performed.

Optionally, in some possible embodiments, S603 and S604 may be further performed.

S603: The OTA manager requests, by using the human-machine interface HMI, a user of the vehicle whether to perform OTA upgrade in a traveling process.

The user of the vehicle may be, for example, a driver of the vehicle or an owner of the vehicle.

In this embodiment of this application, after receiving the upgrade indication information, the OTA manager may request, by using a human-machine interface (human machine interface, HMI) of the vehicle, the user of the vehicle to determine whether to perform the OTA upgrade in the traveling process of the vehicle.

For example, the OTA manager may indicate the HMI to prompt, through voice, the driver to determine whether to perform the OTA upgrade in the traveling process of the vehicle. In this way, the driver can focus on traveling, and safety in the traveling process of the vehicle is ensured as much as possible.

For example, the OTA manager may also indicate the HMI to display, on a pop-up window in a display interface, prompt information of "do you want to perform OTA upgrade", to request the driver to determine whether to perform the OTA upgrade.

S604: The HMI sends confirmation information to the OTA manager.

Correspondingly, the OTA manager receives the confirmation information sent by the HMI.

In an implementation, the confirmation information is obtained by the HMI by using voice feedback information of the driver recognized through speech recognition. The voice feedback information may be, for example, a confirmation reply of "confirm to perform", "perform the current OTA upgrade", "confirm to perform", "perform now", or other language content. This is not specifically limited herein.

In another implementation, the confirmation information is obtained by the HMI through recognition based on a posture of the driver captured by an image capture device in the vehicle. The recognized posture of the driver is a pre-agreed posture indicating "confirmation", for example, may be nodding, turning the head left, turning the head right, raising the left shoulder, raising the right shoulder, or any other posture that does not hinder driving. This is not specifically limited herein. In some possible embodiments, the confirmation information may alternatively be obtained by capturing and recognizing the posture of the driver by the image capture device in the vehicle, and is then sent to the HMI.

In another implementation, the confirmation information is obtained by the HMI through recognition based on a gesture of the driver captured by an image capture device in the vehicle. The recognized gesture of the driver is a pre-agreed gesture indicating "confirmation", for example, may be drawing a line, a tick, or a circle in air, raising a thumb, or another gesture. It may be understood that, when the driver performs any of the gestures to indicate to confirm to perform the OTA upgrade, the driver may complete the agreed gesture by separately raising an index finger or a thumb. In this way, both hands of the driver may not need to leave a steering wheel, ensuring driving safety as much as possible.

In another implementation, the confirmation information may alternatively be generated by the HMI in response to a touch operation performed by the driver that indicates confirmation. For example, the touch operation that indicates confirmation may be tapping a confirmation key in the display interface, or may be flicking or dragging the confirmation key in the display interface to a target location. This is not specifically limited herein.

It can be learned that, in S603 and S604, willingness of the user of the vehicle to perform the OTA upgrade is fully considered, so that an OTA upgrade service is more humanized. In addition, a confirmation reply of the driver is represented through voice, posture, or gesture, to avoid interference to normal driving of the driver, improve human-vehicle interaction experience, allow the driver to focus on driving as much as possible in an OTA upgrade process, and improve driving safety.

After S604 is performed, S605 or S602 may be performed. This is not specifically limited herein.

S605: The OTA manager sends first indication information to the first ECU.

The first indication information indicates that the first ECU performs the OTA upgrade.

That the first indication information is associated with the upgrade indication information may also be understood as follows: The first indication information is sent by the OTA manager to the first ECU based on the upgrade indication information.

In some possible embodiments, the first indication information may further include at least one of the following: a type identifier, second time information, and upgrade sequence information in the upgrade indication information.

In an implementation, the first indication information includes a type identifier. The type identifier is optional information in the first indication information. The type identifier indicates that an OTA upgrade type is hot upgrade. When the type identifier indicates that the OTA upgrade type is hot upgrade, the first indication information may be further understood as: The first indication information indicates that the first ECU may perform the OTA upgrade in the traveling process of the vehicle. For specific descriptions of the type identifier, refer to the related descriptions of the type identifier in S401 in the embodiment in FIG. 4. Details are not described herein again.

In an implementation, the first indication information further includes second time information. The second time information is optional information in the first indication information. For specific descriptions of the second time information, refer to the related descriptions of the second time information in S401 in the embodiment in FIG. 4. Details are not described herein again.

In an implementation, the first indication information further includes upgrade sequence information. The upgrade sequence information is optional information in the first indication information. For specific descriptions of the upgrade sequence information, refer to the related descriptions of the upgrade sequence information in S401 in the embodiment in FIG. 4. Details are not described herein again.

For example, when the upgrade indication information received by the OTA manager includes at least one of the following: the type identifier, the second time information, and the upgrade sequence information, the first indication information sent by the OTA manager based on the upgrade indication information may also include corresponding or same content. This is not specifically limited herein.

In an implementation, that the OTA manager sends first indication information to the first ECU may be: The OTA manager sends the first indication information to the first ECU in response to the received confirmation information.

In some possible embodiments, the OTA manager may further inform the user of the vehicle that the OTA upgrade is upgrade that is capable of being performed in the traveling process of the vehicle. For example, the user of the vehicle is prompted through voice broadcast, or text prompt on a pop-up window in a display interface. Based on the prompt information, the user may learn that the OTA upgrade does not affect normal driving of the vehicle of the user, that is, the user may perform the OTA upgrade during traveling. This helps increase willingness of the user to select to perform the OTA upgrade.

S606: The first ECU performs the OTA upgrade based on an upgrade package.

Specifically, the first ECU performs the OTA upgrade based on the upgrade package in response to the first indication information.

In an implementation, the upgrade package may be included in the first indication information, and the upgrade package is obtained by the first ECU from the first indication information.

In another implementation, the upgrade package may not be included in the first indication information, and the upgrade package may be obtained by the first ECU from the OTA manager after the first ECU receives the first indication information, that is, the upgrade package is obtained by the first ECU from the OTA manager.

In another implementation, the upgrade package may not be included in the first indication information, and the upgrade package may be obtained by the first ECU from the server after the first ECU receives the first indication information, that is, the upgrade package is obtained by the first ECU from the server.

For a specific process in which the first ECU performs the OTA upgrade based on the upgrade package, refer to the related descriptions of S403 in the embodiment in FIG. 4. For brevity of this specification, details are not described herein again.

It can be learned that, according to this embodiment of this application, a new OTA upgrade manner is provided. In this case, use of the vehicle function is not affected in a process in which the vehicle performs the OTA upgrade, that is, the vehicle can perform the OTA upgrade in the traveling state, implementing upgrade during traveling. This helps improve OTA upgrade efficiency of the vehicle, helps increase upgrade willingness of the user of the vehicle, and provides good vehicle use experience for the user of the vehicle.

FIG. 7 is a diagram of a structure of an upgrade apparatus according to an embodiment of this application. The apparatus 30 includes a processing unit 310 and a sending unit 312. The apparatus 30 may be implemented through hardware, software, or a combination of software and hardware.

The processing unit 310 is configured to obtain upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle. The sending unit 312 is configured to send the upgrade indication information.

The apparatus 30 may be configured to implement the method described in the embodiment in FIG. 4. In embodiments in FIG. 4, the processing unit 310 may be configured to perform S401, and the sending unit 312 may be configured to perform S402.

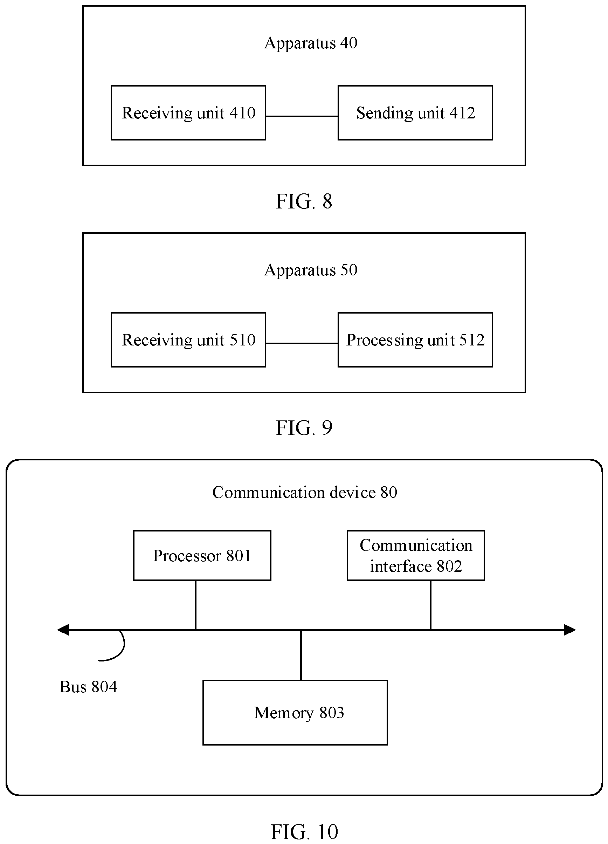

FIG. 8 is a diagram of a structure of an apparatus according to an embodiment of this application. The apparatus 40 includes a receiving unit 410 and a sending unit 412. The apparatus 40 may be implemented through hardware, software, or a combination of software and hardware.

The receiving unit 410 is configured to receive upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle. The sending unit 412 is configured to send first indication information to the first ECU, where the first indication information indicates the first ECU to perform the OTA upgrade.

The apparatus 40 may be configured to implement the method described in the embodiment in FIG. 6. In the embodiment in FIG. 6, the receiving unit 410 may be configured to perform S601, and the sending unit 412 may be configured to perform S605. The apparatus 40 may be further configured to implement the method on the OTA manager side described in the embodiment in FIG. 5. For brevity of this specification, details are not described herein again.

FIG. 9 is a diagram of a structure of an apparatus according to an embodiment of this application. The apparatus 50 includes a receiving unit 510 and a processing unit 512. The apparatus 50 may be implemented through hardware, software, or a combination of software and hardware.

The receiving unit 510 is configured to receive an upgrade package. The processing unit 512 is configured to: when the vehicle is in a traveling process, perform over-the-air OTA upgrade based on the upgrade package.

The apparatus 50 may be configured to implement the method described in the embodiment in FIG. 5. In the embodiment in FIG. 5, the receiving unit 510 may be configured to perform S503, and the processing unit 512 may be configured to perform S504. The apparatus 50 may be further configured to implement the method on the first ECU side described in the embodiment in FIG. 6. For brevity of this specification, details are not described herein again.

It should be noted that one or more of the units in the embodiments shown in FIG. 7, FIG. 8, and FIG. 9 may be implemented by software, hardware, firmware, or a combination thereof. The software or firmware includes but is not limited to computer program instructions or code, and may be executed by a hardware processor. For details about the hardware processor, refer to the following description about the processor. Details are not described herein again.

FIG. 10 is a diagram of a structure of a communication device according to an embodiment of this application. As shown in FIG. 10, the communication device 80 includes a processor 801, a communication interface 802, a memory 803, and a bus 804. The processor 801, the memory 803, and the communication interface 802 communicate with each other by using the bus 804.

It should be understood that quantities of processors and memories in the communication device 80 are not limited in this application.

In a specific implementation, the communication device 80 may be a network side device in the foregoing embodiment. The network side device may be, for example, a server (for example, an OTA server) deployed on a network side, or a component in the server, for example, a chip, a line card, or an integrated circuit. The network side device may be deployed in a cloud environment, that is, may be a cloud server. Alternatively, the network side device may be deployed in an edge environment, that is, may be an edge server. The network side device may be an integrated device, or may be a plurality of distributed devices. This is not specifically limited in embodiments of this application.

In a specific implementation, the communication device 80 may be the OTA manager in the foregoing embodiment, or an internal component of the OTA manager, for example, a chip, a line card, or an integrated circuit.

In a specific implementation, the communication device 80 may be the first ECU in the foregoing embodiment, or an internal component of the first ECU, for example, a chip, a line card, or an integrated circuit.

The bus 804 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 10. However, it does not indicate that there is only one bus or only one type of bus. The bus 804 may include a channel for transferring information between various components (for example, the memory 803, the processor 801, and the communication interface 802) of the communication device 80.

The processor 801 may include any one or more of the following: processors such as a central processing unit (central processing unit, CPU), a microprocessor (microprocessor, MP), or a digital signal processor (digital signal processor, DSP).

The memory 803 is configured to provide storage space, and the storage space may store data such as an operating system and a computer program. The memory 803 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 803 may exist independently, or may be integrated into the processor 801.

The communication interface 802 may be configured to provide an information input or output for the processor 801. Alternatively, the communication interface 802 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 802 may further include a transmitter (for example, a radio frequency transmitter or an antenna), a receiver, or the like coupled to the interface.

The processor 801 in the communication device 80 is configured to read the computer program stored in the memory 803, and is configured to perform the foregoing method, for example, the method described in FIG. 4, FIG. 5, or FIG. 6.

In a possible design, the communication device 80 may be one or more modules in a server performing the method shown in FIG. 4, and the processor 801 may be configured to read one or more computer programs stored in the memory, and is configured to perform the following operations:
obtaining upgrade indication information, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle; and
sending the upgrade indication information by using a sending unit 312.

In a possible design, the communication device 80 may be one or more modules in an OTA manager performing the method shown in FIG. 5 or FIG. 6. The processor 801 may be configured to read one or more computer programs stored in a memory, to perform the following operations:
receiving upgrade indication information by using a receiving unit 410, where the upgrade indication information indicates a first electronic execution unit ECU in a vehicle to perform over-the-air OTA upgrade in a traveling process of the vehicle, and the first ECU includes at least one of an ECU related to traveling safety in the vehicle and an ECU not related to traveling safety in the vehicle; and
sending first indication information to the first ECU by using the sending unit 412, where the first indication information indicates the first ECU to perform the OTA upgrade.

In a possible design, the communication device 80 may be one or more modules in a first ECU performing the method shown in FIG. 5 or FIG. 6, and the processor 801 may be configured to read one or more computer programs stored in a memory, to perform the following operations:
receiving an upgrade package by using a receiving unit 510; and
when the vehicle is in a traveling process, performing OTA upgrade based on the upgrade package.

It should be understood that division of units in the apparatus (for example, the apparatus shown in FIG. 7, FIG. 8, or FIG. 9) is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, like a central processing unit (central processing unit, CPU) or a microprocessor, and the memory is a memory in the apparatus or a memory outside the apparatus. Alternatively, the unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement functions of some or all of the units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the reconfigurable hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the foregoing methods or implement the functions of the units in the apparatus. Types of the at least one processor may be different, for example, may include a CPU and an FPGA, or a CPU and an artificial intelligence processor, or a CPU and a GPU, or the like.

An embodiment of this application further provides a communication system. The communication system includes a first apparatus and a second apparatus. The first apparatus may be the apparatus shown in FIG. 8 or the communication device 80 used as an OTA manager shown in FIG. 10, and the second apparatus may be the apparatus shown in FIG. 9 or the communication device 80 used as a first ECU shown in FIG. 10. The system may be configured to perform the method in FIG. 5 or FIG. 6.

An embodiment of this application further provides a communication system. The communication system includes a first apparatus, a second apparatus, and a third apparatus. The first apparatus may be the apparatus 40 shown in FIG. 8 or the communication device 80 used as an OTA manager shown in FIG. 10. The second apparatus may be the apparatus 50 shown in FIG. 9 or the communication device 80 used as a first ECU shown in FIG. 10. The third apparatus may be the apparatus 30 shown in FIG. 7, or the communication device 80 used as a network side device (for example, a server) shown in FIG. 10. The system may be configured to perform the method in FIG. 4, FIG. 5, or FIG. 6.

An embodiment of this application further provides a communication system. The communication system includes a second apparatus and a third apparatus. The second apparatus may be the apparatus 50 shown in FIG. 9 or the communication device 80 used as a first ECU shown in FIG. 10. The third apparatus may be the apparatus 30 shown in FIG. 7 or the communication device 80 used as a network side device (for example, a server) shown in FIG. 10. The system may be configured to perform the method in FIG. 4.

In the foregoing embodiments in this specification, the descriptions of each embodiment have respective focuses. For a part that is not described in detail in an embodiment, refer to the related descriptions in another embodiment. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

It should be noted that, a person of ordinary skill in the art may learn that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. An upgrade method, wherein the method comprises:
obtaining upgrade indication information, wherein the upgrade indication information indicates a first electronic execution unit ECU in a vehicle to perform over-the-air OTA upgrade in a traveling process of the vehicle, and the first ECU comprises at least one of an ECU related to traveling safety in the vehicle and an ECU not related to traveling safety in the vehicle; and
sending the upgrade indication information.

2. The method according to claim 1, wherein the upgrade indication information comprises a type identifier, and when the type identifier indicates that an OTA upgrade type is hot upgrade, the upgrade indication information indicates the first ECU in the vehicle to perform the OTA upgrade in the traveling process of the vehicle.

3. The method according to claim 1 or 2, wherein when the first ECU performs the OTA upgrade in the traveling process of the vehicle, a first function of the vehicle is in an available state.

4. The method according to any one of claims 1 to 3, wherein the upgrade indication information does not comprise first time information, and the first time information indicates duration required for performing the OTA upgrade by the first ECU.

5. The method according to any one of claims 1 to 4, wherein the method further comprises:
sending an upgrade package corresponding to the OTA upgrade, wherein the upgrade package comprises a first code segment, the first code segment is used to replace a second code segment originally executed by the first ECU, the first code segment corresponds to a jump tag, and the jump tag indicates the first ECU not to run the second code segment but to run the first code segment.

6. An upgrade method, applied to an over-the-air OTA management node, wherein the method comprises:
receiving upgrade indication information, wherein the upgrade indication information indicates a first electronic execution unit ECU in a vehicle to perform over-the-air OTA upgrade in a traveling process of the vehicle, and the first ECU comprises at least one of an ECU related to traveling safety in the vehicle and an ECU not related to traveling safety in the vehicle; and
sending first indication information to the first ECU, wherein the first indication information indicates the first ECU to perform the OTA upgrade.

7. The method according to claim 6, wherein the method further comprises:
receiving an upgrade package corresponding to the OTA upgrade; and
sending the upgrade package to the first ECU.

8. The method according to claim 6 or 7, wherein the upgrade package corresponding to the OTA upgrade comprises a first code segment, the first code segment is used to replace a second code segment originally executed by the first ECU, the first code segment corresponds to a jump tag, and the jump tag indicates the first ECU not to run the second code segment but to run the first code segment.

9. The method according to any one of claims 6 to 8, wherein the method further comprises:
informing a user of the vehicle that the OTA upgrade is upgrade that is capable of being performed in the traveling process of the vehicle.

10. The method according to any one of claims 6 to 9, wherein the method further comprises:
comparing a size of the upgrade package corresponding to the OTA upgrade with a size of first storage space of the first ECU, wherein the first storage space is used to store the upgrade package corresponding to the OTA upgrade; and
the sending first indication information to the first ECU comprises:
when the size of the first storage space is not less than the size of the upgrade package corresponding to the OTA upgrade, sending the first indication information to the first ECU.

11. The method according to claims 6 to 10, wherein the upgrade indication information comprises a type identifier, and when the type identifier indicates that an OTA upgrade type is hot upgrade, the upgrade indication information indicates the first ECU in the vehicle to perform the OTA upgrade in the traveling process of the vehicle.

12. The method according to claims 6 to 11, wherein when the first ECU performs the OTA upgrade in the traveling process of the vehicle, a first function of the vehicle is in an available state.

13. The method according to any one of claims 6 to 12, wherein the upgrade indication information does not comprise first time information, and the first time information indicates duration required for performing the OTA upgrade by the first ECU.

14. An upgrade method, applied to a first electronic execution unit ECU in a vehicle, wherein the method comprises:
receiving an upgrade package; and
when the vehicle is in a traveling process, performing over-the-air OTA upgrade based on the upgrade package.

15. The method according to claim 14, wherein the first ECU comprises at least one of an ECU related to traveling safety in the vehicle and an ECU not related to traveling safety in the vehicle.

16. The method according to claim 14 or 15, wherein the upgrade package comprises a first code segment, and the first code segment is used to replace a second code segment originally executed by the first ECU; and
the performing OTA upgrade based on the upgrade package comprises:
running the first code segment based on a jump tag, wherein the jump tag indicates the first ECU not to run the second code segment but to run the first code segment.

17. The method according to claim 16, wherein the first code segment is stored in first storage space, the second code segment is stored in second storage space, and a storage resource corresponding to the first storage space does not overlap a storage resource corresponding to the second storage space.

18. The method according to claim 17, wherein the method further comprises:
comparing a size of the upgrade package with a size of first storage space; and
the performing OTA upgrade based on the upgrade package comprises:
when the size of the first storage space is not less than the size of the upgrade package, performing the OTA upgrade based on the upgrade package.

19. The method according to any one of claims 14 to 18, wherein the method further comprises:
informing a user of the vehicle that the OTA upgrade is upgrade that is capable of being performed in a traveling process of the vehicle.

20. The method according to any one of claims 14 to 19, wherein the method further comprises:
receiving first indication information from an OTA management node, wherein the first indication information indicates the first ECU to perform the OTA upgrade; and
the performing OTA upgrade based on the upgrade package comprises:
performing the OTA upgrade based on the upgrade package in response to the first indication information.

21. The method according to any one of claims 14 to 19, wherein the method further comprises:
receiving upgrade indication information from a server, wherein the upgrade indication information indicates the first ECU to perform the OTA upgrade in the traveling process of the vehicle; and
the performing OTA upgrade based on the upgrade package comprises:
performing the OTA upgrade based on the upgrade package in response to the upgrade indication information.

22. The method according to claim 21, wherein the upgrade indication information comprises a type identifier, and when the type identifier indicates that an OTA upgrade type is hot upgrade, the upgrade indication information indicates the first ECU to perform the OTA upgrade in the traveling process of the vehicle.

23. The method according to claims 14 to 22, wherein when the first ECU performs the OTA upgrade in the traveling process of the vehicle, a first function of the vehicle is in an available state.

24. The method according to any one of claims 21 to 23, wherein the upgrade indication information does not comprise first time information, and the first time information indicates duration required for performing the OTA upgrade by the first ECU.

25. An upgrade apparatus, wherein the apparatus comprises a processing unit and a sending unit;
the processing unit is configured to obtain upgrade indication information, wherein the upgrade indication information indicates a first electronic execution unit ECU in a vehicle to perform over-the-air OTA upgrade in a traveling process of the vehicle, and the first ECU comprises at least one of an ECU related to traveling safety in the vehicle and an ECU not related to traveling safety in the vehicle; and
the sending unit is configured to send the upgrade indication information.

26. An upgrade apparatus, wherein the apparatus comprises a receiving unit and a sending unit;
the receiving unit is configured to receive upgrade indication information, wherein the upgrade indication information indicates a first electronic execution unit ECU in a vehicle to perform over-the-air OTA upgrade in a traveling process of the vehicle, and the first ECU comprises at least one of an ECU related to traveling safety in the vehicle and an ECU not related to traveling safety in the vehicle; and
the sending unit is configured to send first indication information to the first ECU, wherein the first indication information indicates the first ECU to perform the OTA upgrade.

27. An upgrade apparatus, wherein the apparatus comprises a receiving unit and a processing unit;
the receiving unit is configured to receive an upgrade package; and
the processing unit is configured to: when a vehicle is in a traveling process, perform over-the-air OTA upgrade based on the upgrade package.

28. A system, wherein the system comprises a first apparatus and a second apparatus, or the system comprises a second apparatus and a third apparatus, or the system comprises a first apparatus, a second apparatus, and a third apparatus, wherein the first apparatus is configured to implement the method according to any one of claims 6 to 13, the second apparatus is configured to implement the method according to any one of claims 14 to 24, and the third apparatus is configured to implement the method according to any one of claims 1 to 5.

29. An electronic control unit, wherein the electronic control unit comprises a first apparatus or a second apparatus, the first apparatus is configured to implement the method according to any one of claims 6 to 13, and the second apparatus is configured to implement the method according to any one of claims 14 to 24.

30. A vehicle, wherein the vehicle comprises at least one of the apparatus according to claim 26 and the apparatus according to claim 27, or the vehicle comprises the electronic control unit according to claim 29.

31. A chip, wherein the chip comprises at least one processor and a communication interface;
the communication interface is configured to receive and/or send data, and/or the communication interface is configured to provide an input and/or an output for the processor; and
the at least one processor is configured to implement the method according to any one of claims 1 to 5, or is configured to implement the method according to any one of claims 6 to 13, or is configured to implement the method according to any one of claims 14 to 24.

32. A computer-readable storage medium, wherein the computer-readable storage medium stores instructions, and when the instructions are run on at least one processor, the method according to any one of claims 1 to 5, or the method according to any one of claims 6 to 13, or the method according to any one of claims 14 to 24 is implemented.
